# EUROPÄISCHE PATENTSCHRIFT

(11) **EP 1 590 640 B1**
(45) Veröffentlichungstag und Bekanntmachung des Hinweises auf die Patenterteilung: **16.01.2008**
(21) Anmeldenummer: 03795935.0
(22) Anmeldetag: 19.12.2003
(51) Int. Cl.: G01J 3/02

(54) **KOMPAKT-SPEKTROMETER**
COMPACT SPECTROMETER
SPECTROMETRE COMPACT

(30) Priorität: 04.02.2003 DE 10304312
(43) Veröffentlichungstag der Anmeldung: 02.11.2005
(73) Patentinhaber: Carl Zeiss MicroImaging GmbH, 07745 Jena (DE)
(72) Erfinder: KERSTAN, Felix, 07747 Jena (DE); KLARNER, Ullrich, 07751 Jena (DE); CORRENS, Nico, 99425 Weimar (DE); TUMPACH, Gregor, 07749 Jena (DE)
(74) Vertreter: Muhsfeldt, Willi
(86) Internationale Anmeldenummer: PCT/EP2003/014588
(87) Internationale Veröffentlichungsnummer: WO 2004/070329

(56) Entgegenhaltungen:
- EP-A- 1 041 372
- US-A- 5 953 118
- US-A- 5 995 221

## Beschreibung

Die vorliegende Erfindung betrifft ein kompaktes Spektrometer, bei dem die elektrischen und optischen Komponenten dauerhaft mit einander verbunden sind. Durch eine geringe Anzahl von Einzelteilen wird ein minimaler Montage- und Justieraufwand erreicht.

Nach dem bekannten Stand der Technik werden Spektrometersysteme oft in miniaturisierter Ausführung benötigt, um eine breite Anwendung gewährleisten zu können. Durch die Kombination leistungsfähiger Digitalelektronik mit den optischen Komponenten und die Verwendung flexibler Lichtleitfasern sind Spektrometer entstanden, deren Anwendungsgebiete von der Routineanalytik im Labor bis hin zu speziellen Aufgaben in der Prozess-Messtechnik und der Qualitätsüberwachung im Fertigungsprozess reichen. Dementsprechend sind im Stand der Technik zahlreiche spektrometrische Systeme für verschiedenste Anwendungen bekannt.

Eine Anordnung zur Messung optischer Spektren wird in der DE 198 36 595 beschrieben. Bei diesen Spektrometern sind die optischen und elektronischen Bauelemente übereinander in Sandwich-Bauweise angeordnet und dauerhaft miteinander verbunden. Aufgrund dieser Bauweise sind diese Spektrometer sehr kompakt und robust. Der Aufwand für die Justierung der optischen Bauelemente, insbesondere von Reflexionsgitter und Spiegel scheint jedoch erheblich zu sein.

Das in EP 1 041 372 beschriebene Spektrometer verfügt über Hilfsmittel zur einfacheren Verbindung der einzelnen optischen Komponenten, um den Justieraufwand des optischen Systems, der ein wesentlicher Kostenfaktor bei der Fertigung derartiger Spektrometer ist, zu verringern.

Konzentrische Spektrometer werden in den Patentschriften US 6,181,418 und US 5,995,221 beschrieben. Durch die konzentrische Form der Gehäuse- und anderen Bauteile können thermisch bedingte Ausdehnungen und Spannungen gut beherrscht werden. Mit den vorgeschlagenen Lösungen werden Streulicht und Reflexionsspektren, die die Empfindlichkeit und die Messgenauigkeit der Spektrometer wesentlich beeinflussen, verringert. Auch bei dieser Lösung ist der Justieraufwand durch die Vielzahl der Einzelteile erheblich.

Bei der in der DE 196 09 916 beschriebenen Lösung wird ein miniaturisiertes kompaktes Spektrometersystem zur Kunststofferkennung und deren Trennung in der Recyclingindustrie eingesetzt. Dabei werden aus Kostengründen statt der kompletten Detektorzeilen eine kleine Anzahl von nicht gleichabständigen Detektoren an den Stellen des erzeugten Spektrums angebracht, die für eine Erkennung und Unterscheidung der Stoffsorte ausreichend sind. Dadurch wird zwar die Zeit zum Auslesen und Auswerten reduziert, der Justier- und Montageaufwand wird durch die einzelnen Detektoren noch größer.

In der Gebrauchsmuster-Anmeldung DE 299 06 678 wird ein Kleinspektrometer zur Bestimmung des Zustandes von Oberflächen von Fahrbahnen und/oder Fahrzeugen beschrieben. Dabei sind die Gehäuseteile so gefertigt, dass sie Aussparungen, Nuten und Zapfen aufweisen, so dass die anderen Bauteile auf einfache Weise in die vordefinierte Lage gebracht werden können. Es ist somit nur noch ein geringerer Aufwand für die Feinjustierung erforderlich.

Die genannten Spektrometer-Anordnungen haben jedoch den Nachteil, dass selbst bei einer optimierten Fertigung, die nur noch eine Feinjustierung der optischen Bauelemente erfordert, der Montage- und Justieraufwand durch die Anzahl der zu justierenden Elemente zu groß wird. Eine kostengünstige und effektive Massenfertigung ist dadurch kaum möglich.

Der vorliegenden Erfindung liegt die Aufgabe zugrunde eine spektrometrische Anordnung zu entwickeln, die in ihren Ausmaßen kompakt ist und bei der der erforderliche Justier- und Montageaufwand minimiert wird.

Erfindungsgemäß wird die Aufgabe durch die Merkmale der unabhängigen Ansprüche gelöst. Bevorzugte Weiterbildungen und Ausgestaltungen sind Gegenstand der abhängigen Ansprüche.

Das erfinderische Spektrometer findet aufgrund seiner kompakten Baugröße und des minimierten Justier- und Montageaufwandes zu dessen Fertigung, Anwendung von der Routineanalytik im Labor bis hin zu speziellen Aufgaben in der Prozess-Messtechnik und der Qualitätsüberwachung im Fertigungsprozess.

Die Erfindung wird nachfolgend anhand eines Ausführungsbeispieles beschrieben. Dazu zeigen
- Figur 1:: eine Schnittdarstellung des Spektrometers,
- Figur 2:: eine Draufsicht des Trägers,
- Figur 3:: eine Seitenansicht des Spektrometers und
- Figur 4:: eine Draufsicht des Spektrometers.

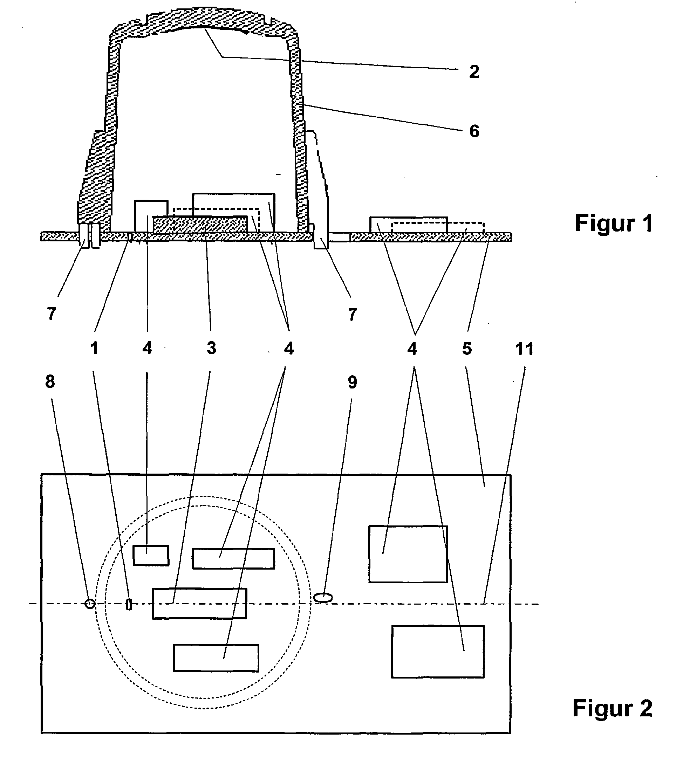

Das in **Figur 1** in einer Schnittdarstellung dargestellte Kompakt-Spektrometer besteht aus einem Eintrittsspalt **1,** einem abbildenden Gitter **2,** ein oder mehreren zeilen- oder matrixförmig angeordneten Detektorelementen **3** und Elementen einer Ansteuer- und Auswerteeinheit **4.** Die Detektorelemente **3** und der Eintrittsspalt **1** sind auf einem gemeinsamen Träger **5,** vorzugsweise einer Leiterplatte aus Keramik, angeordnet, wobei der Eintrittsspalt **1** als rechteckige Öffnung ausgeführt ist. Auf den freien Flächen des Trägers **5** können zusätzlich Elemente der Ansteuer- und Auswerteeinheit **4,** sowohl innerhalb als auch außerhalb des Spektrometergehäuse **6** angeordnet sein. Die Detektorelemente **3,** der Eintrittsspalt **1** und die zusätzlichen Elemente der Ansteuer- und Auswerteeinheit **4** sind im Leiteplattenherstellprozess mit relativ geringem Aufwand in genauer gegenseitiger Positionierung ohne größeren Aufwand fertigbar.

Das über eine sphärische Form verfügende abbildende Gitter **2** ist im Spektrometergehäuse **6** angeordnet. Beide Elemente bestehen dabei aus Materialien mit möglichst gleich hohem Ausdehnungskoeffizienten. Die Befestigung des abbildenden Gitters **2** am Spektrometergehäuse **6** erfolgt dabei durch Federelemente oder durch Kleben bzw. Schweißen. Es ist aber auch möglich, dass das Spektrometergehäuse **6** und das abbildende Gitter **2** als ein Spritzgussteil gefertigt wird.

Zum passgenauen und sicheren Zusammenfügen weisen der Träger **5** und das Spektrometergehäuse **6** die erforderlichen Hilfsmittel auf, wobei diese Hilfsmittel mindestens ein Fest- und ein Loslager darstellen. Das Spektrometergehäuse **6** verfügt dazu über entsprechende Zapfen **7** und der Träger **5** über die erforderlichen Bohrungen **8** und **9.** Die Bohrung **9,** die das Loslager darstellt, ist dabei als Langloch ausgeführt. Die durch den Träger **5** ragenden Zapfen **7** können an dessen Unterseite verbreitert sein, so dass ein fester Sitz gewährleistet wird (entsprechend **Figur 1**).

In einer weiteren Ausgestaltungsvariante können der Träger **5** und das Spektrometergehäuse **6** nach dem passgenauen Zusammenfügen auch miteinander verklebt oder verschweißt werden.

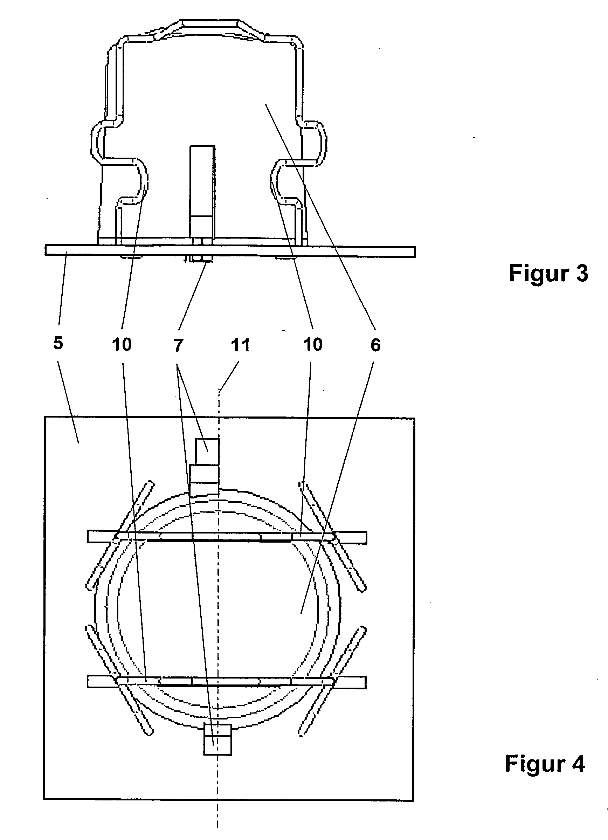

**Figur 3** zeigt die Seitenansicht des Kompakt-Spektrometers bei dem das Spektrometergehäuse **6** und der Träger **5** mittels eines oder mehrerer Federelemente **10** verbunden sind, um eine kraftschlüssige Verbindung zu gewährleisten. Dazu kann das Spektrometergehäuse **6** an dessen Oberseite über entsprechende Kerben verfügen, in die die Federelemente **10** einrasten.

Die Draufsicht eines derart gehalterten Spektrometergehäuse **6** wird in der **Figur 4** dargestellt.

Sowohl die sich auf dem Träger **5** befindenden Detektorelemente **3** und der Eintrittsspalt **1,** als auch das abbildende Gitter **2** im Spektrometergehäuse **6** sind, wie in **Figur 2** dargestellt, symmetrisch zu einer gedachten Mittelachse **11** des Trägers **5** angeordnet. Damit bleiben diese auch bei einer Ausdehnung infolge einer thermischen Belastung zueinander justiert.

In einer weiteren Ausgestaltung verfügt die Anordnung an der Unterseite des Trägers **5** über eine oder mehrere Lichtquellen zur Beleuchtung des Testobjektes. Die als Eintrittsspalt **1** dienende Öffnung im Träger **5** kann über eine zusätzliche Optik zum Bündeln des vom Testobjekt kommenden Lichtes und/oder eine Halterung zum Befestigen eines Lichtleiterkabels verfügen.

Das Spektrometergehäuse **6** wird vorzugsweise in Spritzgusstechnik hergestellt. Das Spritzgusswerkzeug besteht dabei aus einem Innen- und einem Außenteil. Die Einspritzung erfolgt parallel zur Gitterstrichrichtung, wobei die Angüsse auf der unkritischen Außenseite sind, da an die Außenform des Spektrometergehäuses **6** keine besonderen Genauigkeitsanforderungen gestellt werden.

Das Spektrometergehäuse **6** wird aus einem lichtabsorbierenden (eingefärbtem) Material gefertigt und kann mit Aluminium oder auch Gold belegt werden, um es vor Feuchtigkeitsaufnahme und damit Quellen zu schützen. Das abbildende Gitter **2** ist in Abhängigkeit vom Wellenlängenbereich mit einer Reflexionsschicht aus Aluminium oder Gold und falls erforderlich mit einer zusätzlichen Schutzschicht zu belegen.

Mit der erfindungsgemäßen Anordnung wird ein Spektrometer zur Verfügung gestellt, welches aufgrund seiner kompakten Baugröße und des minimierten Justier- und Montageaufwandes zu dessen Fertigung eine breite Anwendung finden wird. Das Kompakt-Spektrometer ist für Aufgaben der Routineanalytik im Labor und der Prozess-Messtechnik sowie der Qualitätsüberwachung in Fertigungsprozessen gleichermaßen geeignet.

## Patentansprüche

1. Kompakt-Spektrometer, bestehend aus einem Eintrittsspalt (1), einem Spektrometergehäuse (6), einem Träger (5), einem an dem Spektrometergehäuse (6) angeordneten, abbildenden Gitter (2), ein oder mehreren zeilen- oder matrixförmig angeordneten Detektorelementen (3) und Elementen einer Ansteuer- und Auswerteeinheit (4), bei dem das Spektrometergehäuse (6) und der Träger (5) über die zum passgenauen und sicheren Zusammenfügen erforderlichen Hilfsmittel verfügen, wobei diese Hilfsmittel mindestens ein Fest- und ein Loslager darstellen, **dadurch gekennzeichnet, dass** sich die Detektorelemente (3) und der Eintrittsspalt (1) auf dem gemeinsamen Träger (5) befinden, der Träger (5) auf den freien Flächen die Elemente der Ansteuer- und Auswerteeinheit (4) enthalten kann, die Detektorelemente (3) und der Eintrittsspalt (1) auf einer gedachten Mittelachse (11) des Trägers (5) angeordnet sind und sowohl die Detektorelemente (3) und der Eintrittsspalt (1), als auch das abbildende Gitter (2) im Spektrometergehäuse (6), symmetrisch zu der gedachten Mittelachse (11) des Trägers (5) angeordnet sind, so dass diese auch bei einer Ausdehnung infolge einer thermischen Belastung zueinander justiert bleiben.

2. Kompakt-Spektrometer nach Anspruch 1, **dadurch gekennzeichnet, dass** der Eintrittsspalt (1) als rechteckige Öffnung in der als Träger (5) dienenden Leiterplatte ausgeführt ist.

3. Kompakt-Spektrometer nach mindestens einem der vorgenannten Ansprüche, **dadurch gekennzeichnet, dass** das abbildende Gitter (2) in das Spektrometergehäuse (6) eingelassen sein kann.

4. Kompakt-Spektrometer nach mindestens einem der vorgenannten Ansprüche, **dadurch gekennzeichnet, dass** das Spektrometergehäuse (6) und das abbildende Gitter (2) ein Spritzgussteil ist.

5. Kompakt-Spektrometer nach mindestens einem der vorgenannten Ansprüche, **dadurch gekennzeichnet, dass** an der Unterseite des Trägers (5) ein oder mehrere Lichtquellen zur Beleuchtung des Testobjektes befinden.

6. Kompakt-Spektrometer nach mindestens einem der vorgenannten Ansprüche, **dadurch gekennzeichnet, dass** der Eintrittsspalt (1) Ober eine zusätzliche Optik zum Bündeln des vom Testobjekt kommenden Lichtes verfügt.

## Claims

1. Compact spectrometer consisting of an entrance slit (1), a spectrometer housing (6), a support (5), an imaging grating (2) which is disposed on the spectrometer housing (6), one or several detector elements (3) which are disposed in rows or matrixes, and elements of a control and evaluating unit (4), in which the spectrometer housing (6) and the support (5) have the auxiliary means required for precisely fitting and reliable assembly, wherein these auxiliary means constitute at least one fixed bearing and one movable bearing, **characterised in that** the detector elements (3) and the entrance slit (1) are located on the joint support (5), the support (5) can contain on the free surfaces the elements of the control and evaluating unit (4), the detector elements (3) and the entrance slit (1) are disposed on an imaginary centre axis (11) of the support (5) and the detector elements (3) and the entrance slit (1) as well as the imaging grating (2) in the spectrometer housing (6) are disposed in a symmetrical manner with respect to the imaginary centre axis (11) of the support (5), so that they remain adjusted with respect to each other even when expansion occurs as a result of thermal loading.

2. Compact spectrometer as claimed in claim 1, **characterised in that** the entrance slit (1) is designed as a rectangular opening in the printed circuit board which serves as the support (5).

3. Compact spectrometer as claimed in at least one of the preceding claims, **characterised in that** the imaging grating (2) can be embedded into the spectrometer housing (6).

4. Compact spectrometer as claimed in at least one of the preceding claims, **characterised in that** the spectrometer housing (6) and the imaging grating (2) are injection-moulded parts.

5. Compact spectrometer as claimed in at least one of the preceding claims, **characterised in that** one or several light sources for illuminating the test object are located on the underside of the support (5).

6. Compact spectrometer as claimed in at least one of the preceding claims, **characterised in that** the entrance slit (1) has additional optics to bundle the light coming from the test object.

## Revendications

1. Spectromètre compact, comprenant une fente d'entrée (1), un boîtier de spectromètre (6), un support (5), une grille (2) de reproduction disposée sur le boîtier de spectromètre (6), un ou plusieurs éléments détecteurs (3) disposés en forme de ligne ou de matrice et des éléments d'une unité d'activation et d'analyse (4), dans lequel le boîtier de spectromètre (6) et le support (5) disposent des moyens auxiliaires nécessaires pour l'assemblage très précis et sûr, ce moyen auxiliaire présentant au moins un palier fixe et un palier mobile, **caractérisé en ce que** les éléments détecteurs (3) et la fente d'entrée (1) se trouvent sur le support (5) commun, le support (5) pouvant contenir les éléments de l'unité d'activation et d'analyse (4) sur les surfaces libres, les éléments détecteurs (3) et la fente d'entrée (1) sont disposés sur un axe médian (11) imaginaire du support (5) et aussi bien les éléments détecteurs (3) et la fente d'entrée (1) que la grille (2) de reproduction sont disposés dans le boîtier de spectromètre (6), de façon symétrique par rapport à l'axe médian (11) imaginaire du support (5), de sorte que ces éléments restent ajustés les uns par rapport aux autres même dans le cas d'une dilatation due à une contrainte thermique.

2. Spectromètre compact selon la revendication 1, **caractérisé en ce que** la fente d'entrée (1) est formée sous forme d'ouverture rectangulaire dans la plaque conductrice servant de support (5).

3. Spectromètre compact selon au moins l'une quelconque des revendications susmentionnées, **caractérisé en ce que** la grille (2) de reproduction peut être enchâssée dans le boîtier de spectromètre (6).

4. Spectromètre compact selon au moins l'une quelconque des revendications précédentes, **caractérisé en ce que** le boîtier de spectromètre (6) et la grille (2) de reproduction sont une pièce moulée par injection.

5. Spectromètre compact selon au moins l'une quelconque des revendications précédentes, **caractérisé en ce qu'**une ou plusieurs sources lumineuses destinées à l'éclairage de l'objet testé se trouvent sur le côté inférieur du support (5).

6. Spectromètre compact selon au moins l'une quelconque des revendications précédentes, **caractérisé en ce que** la fente d'entrée (1) dispose d'une optique supplémentaire pour la concentration de lumière arrivant de l'objet testé.
